# EUROPEAN PATENT APPLICATION

(11) **EP 2 479 935 A1**
(43) Date of publication of application: **25.07.2012**
(21) Application number: 10816651.3
(22) Date of filing: 20.08.2010
(51) Int. Cl.: H04L 12/46

(54) **METHOD, SYSTEM AND COMMUNICATION TERMINAL FOR IMPLEMENTING INTER-COMMUNICATION BETWEEN NEW NETWORK AND INTERNET**

(30) Priority: 18.09.2009 CN 200910176781
(71) Applicant: ZTE Corporation, Shenzhen, Guangdong 518057 (CN)
(72) Inventor: XU, Zhijun, Shenzhen Guangdong 518057 (CN); HUANG, Bing, Shenzhen Guangdong 518057 (CN); FU, Tao, Shenzhen Guangdong 518057 (CN); WU, Qiang, Shenzhen Guangdong 518057 (CN)
(74) Representative: Krauns, Christian
(86) International application number: PCT/CN2010/076170
(87) International publication number: WO 2011/032447

(57) **Abstract**

The present invention relates to a method, system and communication terminal for implementing inter-communication between a new network and the Internet. The implementation method includes that: an access identifier data packet is transmitted between a communication terminal of the new network and an identity route data packet conversion device, wherein a source address and a destination address of the access identifier data packet are represented by access identifiers; the identity route data packet conversion device performs conversion between the access identifier data packet and a routing-location identifier data packet, wherein a source address and a destination address of the routing-location identifier data packet are represented by routing-location identifiers; the routing-location identifier data packet is transmitted between the identity route data packet conversion device and an inter-communication data packet conversion device; the inter-communication data packet conversion device performs conversion between the routing-location identifier data packet and an IP data packet, wherein a source address and a destination address of the IP data packet are represented by IP addresses; and the IP data packet is transmitted between the inter-communication data packet conversion device and a communication terminal of the Internet. The method, system and terminal according to the present invention can implement inter-communication between a new network and the Internet.

## Description

### Technical Field

The present invention relates to the field of communications, and in particular, to a method, system and communication terminal for implementing inter-communication between a new network and the Internet.

### Background of the Related Art

With the development of the information technology, an information network represented by the Internet has played an increasingly important role in the economic and social development. However, the Internet also exposes more and more problems in the use process thereof. At the beginning of the Internet design, only a fixed, trusted terminal is taken into consideration, with neither terminal mobility being supported, nor an inherent security mechanism being provided. With the development of wireless technologies such as 3G, beyond 3G, 4G etc., the support of the Internet for mobile terminals become an increasingly urgent issue. At the same time, with the expansion of the scope of Internet applications, the security problem also becomes more prominent, and such problems are difficult to solve under the framework of the existing Internet technology.

TCP/IP protocol is the basis of the Internet. An IP address has dual attributes of identity and location, which is the origin of the Internet not being able to support the mobility. As the identity attribute of the terminal, the IP address cannot be changed in the moving process of the terminal; otherwise, an upper service connection such as TCP, UDP etc. will be interrupted as the change of the address; as the location attribute of the terminal, the IP address must be changed in the moving process of the terminal (the address must have a prefix of a subnet where it is located currently); otherwise, a router cannot correctly forward a data packet to the terminal. At the same time, having dual attributes by the IP address is the reason why the security problem of the Internet cannot be solved essentially. As the IP address must include the location attribute of the terminal, the mobile terminal cannot be allocated with a fixed IP address, and thus, an identity of an attacker such as a hacker etc. cannot be determined according to the IP address on the Internet. This is the fundamental reason why the security problems such as attack, fraud, abuse etc. on the Internet cannot be solved at present.

To point against the defect of the IP protocol having dual attributes, the industry researches on a plurality of the next generation network technologies based on identity and location separation, which are generally divided into two kinds of schemes based on a network and based on a host respectively. The new network is a scheme based on the network, which can reduce the scale of a routing table of the Internet, and can indirectly solve the mobility of the host. In the scheme of the new network, the location IP of a boundary routing device and the IP address configured to identifying the host are separated into two different spaces. One boundary routing device can access any host IP address, and these host IP address segments are not exposed in a backbone network of the new network. The routing table of the backbone network only stores public IP addresses of an access service router, that is, for the backbone network, the access service router is equivalent to the host of the network.

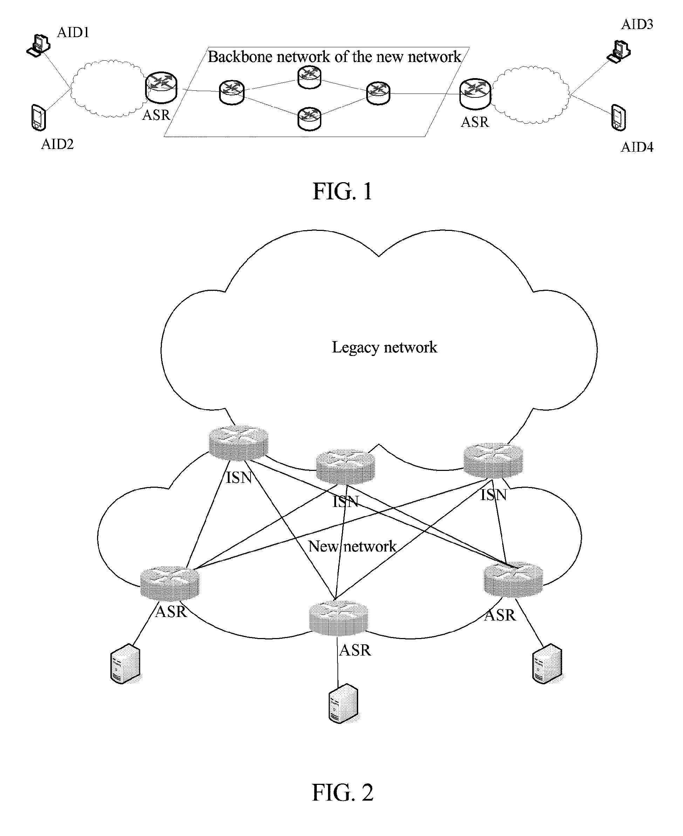

A diagram of architecture of a new network is as shown in FIG. 1. In the figure, the access service router is referred to as ASR. Both a source address and a destination address when a host in the boundary of the ASR router initiates communication are Access Identifiers (AID) of the terminal host. After receiving a message, the ASR obtains by inquiry Routing-Location Identifiers (RID) to which the destination AID corresponds, and converts the original message to form a data packet with a source address and a destination address of a header of the message being RIDs respectively. When reaching the target ASR, the data message is formed to be a data message with both a source address and a destination address being AIDs after being analyzed and mapped, and then is forwarded to the destination terminal.

The construction, propaganda and popularization based on the new network needs a long time, and the new network and the legacy Internet will coexist for a long period of time. Therefore, the two networks need to be inter-communicated.

The inter-communication between the new network and the legacy Internet refers to a terminal of the new network and a terminal of the legacy Internet can communicate with each other. The terminal of the new network can access services provided by the legacy Internet, and the terminal of the legacy Internet can also access the services of the new network. However, at present, there is no perfect inter-communication scheme to solve this problem.

### Summary of the Invention

The technical problem to be solved by the present invention is to provide a method, system and communication terminal for implementing inter-communication between a new network and Internet, so as to implement inter-communication between the new network and the Internet.

In order to solve the above technical problem, the present invention provides a method for implementing inter-communication between a new network and the Internet, comprising a process of transmitting a data packet from a communication terminal of the new network to a communication terminal of the Internet, wherein, the process of transmitting a data packet from a communication terminal of the new network to a communication terminal of the Internet comprises:
the communication terminal of the new network transmitting an AID data packet to an Access Service Router (ASR) of the new network, wherein, a source address is an AID of the communication terminal of the new network, and a destination address is an AID used by the communication terminal of the Internet to inter-communicate with the new network;
the ASR receiving the AID data packet, analyzing the AID data packet and then encapsulating the analyzed AID data packet to be a RID data packet, and then transmitting the RID data packet to an Inter-communication Service Node (ISN), wherein, in the RID data packet, a source address is a RID of the communication terminal of the new network, and a destination address is a RID used by the communication terminal of the Internet to inter-communicate with the new network;
after receiving the RID data packet, the ISN analyzing the RID data packet and then encapsulating the analyzed data packet to be an IP data packet, wherein, a source address is an IP address used by the communication terminal of the new network to inter-communicate with the Internet, and a destination address is an IP address of the communication terminal of the Internet; and
the ISN transmitting the IP data packet to the communication terminal of the Internet through routing.

The method further comprises a process of the communication terminal of the Internet transmitting a data packet to the communication terminal of the new network, wherein, the process of the communication terminal of the Internet transmitting a data packet to the communication terminal of the new network comprises:
the ISN receiving the IP data packet transmitted by the communication terminal of the Internet, wherein, a source address is an IP address of the communication terminal of the Internet, and a destination address is an IP address used by the communication terminal of the new network to inter-communicate with the Internet;
the ISN analyzing the IP data packet, encapsulating the analyzed IP data packet to be a RID data packet, and then transmitting the encapsulated RID data packet to the ASR, wherein, in the RID data packet, a source address is a RID used by the communication terminal of the Internet to inter-communicate with the new network, and a destination address is a RID of the communication terminal of the new network;
the ASR de-encapsulating the RID data packet into an AID data packet, wherein, a source address is an AID used by the communication terminal of the Internet to inter-communicate with the new network, and a destination address is an AID of the communication terminal of the new network; and
the ASR transmitting the AID data packet to the communication terminal of the new network through routing.

The communication terminal of the Internet is a terminal or a service server of the Internet and the communication terminal of the new network is a service server or a terminal of the new network.

The AID of the communication terminal of the Internet is an IPv4 address, an IPv6 address of the Internet communication terminal in the Internet or a long bit including the IPv4 address; the RID of the communication terminal of the Internet is an IPv4 address, an IPv6 address of the new network communication terminal in the Internet, a long bit including the IPv4 address, or a location identifier of the ISN; and the IP address of the communication terminal of the new network is an AID of the new network communication terminal in the new network, an exclusive, fixed public IP address, or a shared, public IP address which is specifically configured for the inter-communication.

In order to solve the above technical problem, the present invention further provides another method for implementing inter-communication between a new network and the Internet, wherein, a communication terminal of the new network and a communication terminal of the Internet implement the inter-communication through an identity route data packet conversion device and an inter-communication data packet conversion device; the communication terminal of the new network is located in the new network and has an AID representing an identity, a RID representing a location and an IP address configured to implement the inter-communication; and the communication terminal of the Internet is located in the Internet, and has an IP address, and an AID representing an identity and a RID representing a location which are configured to implement the inter-communication, the method comprises:
a step of AID data packet transmission, wherein, the AID data packet is transmitted between the communication terminal of the new network and the identity route data packet conversion device, and a source address and a destination address of the AID data packet are represented by AIDs;
a step of identity route data packet conversion, wherein, the identity route data packet conversion device performs inter-conversion between the AID data packet and the RID data packet, and a source address and a destination address of the RID data packet are represented by RIDs;
a step of RID data packet transmission, wherein, the RID data packet is transmitted between the identity route data packet conversion device and the inter-communication data packet conversion device;
a step of inter-communication data packet conversion, wherein, the inter-communication data packet conversion device performs inter-conversion between the RID data packet and an IP data packet, and a source address and a destination address of the IP data packet are represented by IP addresses; and
a step of IP data packet transmission, wherein, the IP data packet is transmitted between the inter-communication data packet conversion device and the communication terminal of the Internet.

The communication terminal of the Internet is a terminal or a service server of the Internet and the communication terminal of the new network is a service server or a terminal of the new network.

The AID of the communication terminal of the Internet is an IPv4 address, an IPv6 address of the Internet communication terminal in the Internet or a long bit including the IPv4 address; the RID of the communication terminal of the Internet is an IPv4 address, an IPv6 address of the new network communication terminal in the Internet, a long bit including the IPv4 address, or a location identifier of the ISN; and the IP address of the communication terminal of the new network is an AID of the new network communication terminal in the new network, an exclusive, fixed public IP address, or a shared, public IP address which is specifically configured for the inter-communication.

In order to solve the above technical problem, the present invention further provides a system for implementing inter-communication between a new network and the Internet, comprising a communication terminal of the Internet, an Inter-communication Service Node (ISN), an Access Service Router (ASR) and a communication terminal of the new network, wherein,
the communication terminal of the new network is configured to transmit an AID data packet to the ASR, wherein, a source address is an AID of the communication terminal of the new network, and a destination address is an AID used by the communication terminal of the Internet to inter-communicate with the new network;
the ASR is located in the new network and is connected with the communication terminal of the new network, and is configured to receive the AID data packet transmitted by the communication terminal of the new network, and analyze the AID data packet and encapsulate the analyzed AID data packet to be a RID data packet and forward the RID data packet to the ISN, wherein, in the RID data packet, a source address is a RID of the communication terminal of the new network, and a destination address is a RID used by the communication terminal of the Internet to inter-communicate with the new network;
the ISN is connected with the ASR, and is configured to receive the RID data packet, and analyze the RID data packet and encapsulate the analyzed RID data packet to be an IP data packet, wherein, a source address is an IP address for the communication terminal of the new network to inter-communicate with the Internet, and a destination address is an IP address of the communication terminal of the Internet; and is further configured to transmit the IP data packet to the communication terminal of the Internet through the Internet; and
the communication terminal of the Internet is connected with the ISN through the Internet, and is configured to receive and process the IP data packet transmitted by the ISN.

The communication terminal of the Internet is further configured to transmit the IP data packet to the ISN, wherein, a source address is an IP address of the communication terminal of the Internet, and a destination address is an IP address for the communication terminal of the new network to inter-communicate with the Internet;
the ISN is further configured to receive the IP data packet, analyze the IP data packet and encapsulate the analyzed IP data packet to be a RID data packet, and forward the RID data packet to the ASR, wherein, in the RID data packet, a source address is a RID used by the communication terminal of the Internet to inter-communicate with the new network, and a destination address is a RID of the communication terminal of the new network;
the ASR is further configured to receive the RID data packet, analyze the RID data packet and encapsulate the analyzed RID data packet to be an AID data packet, and transmit the AID data packet to the corresponding communication terminal of the new network, wherein, in the AID data packet, a source address is an AID of the communication terminal of the Internet, and a destination address is an AID of the new network communication terminal in the new network; and
the communication terminal of the new network is configured to receive and process the AID data packet.

The communication terminal of the Internet is a terminal or a service server of the Internet and the communication terminal of the new network is a service server or a terminal of the new network.

The AID of the communication terminal of the Internet is an IPv4 address, an IPv6 address of the Internet communication terminal in the Internet or a long bit including the IPv4 address; the RID of the communication terminal of the Internet is an IPv4 address, an IPv6 address of the new network communication terminal in the Internet, a long bit including the IPv4 address, or a location identifier of the ISN; and the IP address of the communication terminal of the new network is an AID of the new network communication terminal in the new network, an exclusive, fixed public IP address, or a shared, public IP address which is specifically configured for the inter-communication.

In order to solve the above technical problem, the present invention further provides another system for implementing inter-communication between a new network and the Internet, comprising:
a communication terminal of the new network, which is located in the new network, has an AID representing an identity, a RID representing a location, and an IP address configured to implement the inter-communication, and is configured to generate and process an AID data packet, of which a source address and a destination address are represented by AIDs; and is further configured to communicate with an identity route data packet conversion device using the AID data packet;
the identity route data packet conversion device, which is configured to implement bidirectional conversion and forwarding of the AID data packet and a RID data packet, wherein, a source address and a destination address of the RID data packet are represented by RIDs;
an inter-communication data packet conversion device, which is configured to implement bidirectional conversion and forwarding of the RID data packet and an IP data packet, wherein, a source address and a destination address of the IP data packet are represented by IP addresses; and is further configured to communicate with a communication terminal of the Internet using the IP data packet; and
the communication terminal of the Internet, which is located in the Internet, has an IP address, and an AID representing an identity and a RID representing a location which are configured to implement the inter-communication, and is configured to generate and process the IP data packet.

The communication terminal of the Internet is a terminal or a service server of the Internet and the communication terminal of the new network is a service server or a terminal of the new network.

The AID of the communication terminal of the Internet is an IPv4 address, an IPv6 address of the Internet communication terminal in the Internet or a long bit including the IPv4 address; the RID of the communication terminal of the Internet is an IPv4 address, an IPv6 address of the new network communication terminal in the Internet, a long bit including the IPv4 address, or a location identifier of the ISN; and the IP address of the communication terminal of the new network is an AID of the new network communication terminal in the new network, an exclusive, fixed public IP address, or a shared, public IP address which is specifically configured for the inter-communication.

In order to solve the above technical problem, the present invention further provides a communication terminal, which is applied to a new network, has an AID representing an identity, a RID representing a location and an IP address configured to implement inter-communication, and is configured to generate and process an AID data packet, and communicate with an identity route data packet conversion device using the AID data packet, wherein, a source address and a destination address of the AID data packet are represented by AIDs.

In order to solve the above technical problem, the present invention further provides another communication terminal, which is applied to the Internet, has an IP address and an AID representing an identity and a RID representing a location which are configured to implement inter-communication, and is configured to generate and process an IP data packet, and communicate with a communication terminal of the Internet using the IP data packet, wherein, a source address and a destination address of the IP data packet are represented by IP addresses.

The method and system for implementing inter-communication between a new network and an existing Internet (legacy network) according to the present invention implements data inter-communication between the legacy network and the new network, expands the applicable scope of services, and enables inter-communication between networks using different identifiers to distinguish communication terminals, by adding inter-communication service nodes with bidirectional conversion and forwarding functions of the inter-communication data packet between the new network and the legacy network, which specifically comprise:
the new network terminal can access various services of the existing network, and inter-communicate with the existing network terminals; and
the services of the new network can be accessed commonly by the existing network and the new network if the services are transplanted from the existing network;
the terminal of the existing network can access the new network without any amendment, and can use the services of the existing network and the services transplanted into the new network.

### Brief Description of Drawings

FIG. 1 is a diagram of architecture of a new network;
FIG. 2 is a first diagram of architecture of inter-communication between a new network and a legacy network according to the present invention;
FIG. 3 is a second diagram of architecture of inter-communication between a new network and a legacy network according to the present invention;
FIG. 4 is a data flowchart of an application embodiment of a new network terminal accessing services of a legacy network;
FIG. 5 is a data flowchart of an application embodiment of a legacy network terminal accessing services of a new network; and
FIG. 6 is a diagram of implementing inter-communication between a new network and a legacy network according to the present invention.

### Preferred Embodiments of the Present Invention

A new network and an existing Internet (legacy network for short hereinafter) based on identity/location separation architecture primarily differ in that formats and addresses of a data packet are different. The primary idea of a method for implementing inter-communication between a new network and an existing Internet according to the present invention is that an inter-communication service node is added between the new network and the Internet, and the inter-communication service node implements a function of inter-communication data packet conversion, including mapping processing of an address, converting of a format of a data packet, and forwarding of the data packet, so as to implement communication between a terminal or a service server of the new network and a terminal or a service server of the legacy network.

Architecture of inter-communication between a new network and a legacy network is as shown in FIG. 2, which comprises the following modules:
a communication terminal of the new network, which is located in the new network, has an AID representing an identity, a RID representing a location, and an IP address configured to implement the inter-communication, is responsible for generating and processing an AID data packet, and communicating with an Access Service Router (ASR) using the AID data packet; wherein, a source address and a destination address of the AID data packet are represented by AIDs; and the communication terminal of the new network comprises the following specific functions:
the communication terminal of the new network is configured to transmit the AID data packet to the ASR, wherein, a source address is an AID of the communication terminal of the new network, and a destination address is an AID used by the communication terminal of the Internet to inter-communicate with the new network; and is further configured to receive and process the AID data packet transmitted by the ASR, wherein, a source address is an AID of the communication terminal of the Internet, and a destination address is an AID of the new network communication terminal in the new network;
the ASR, which is located in the new network, is connected with the communication terminal of the new network, has a function of AID data packet conversion, and is responsible for bidirectional conversion and forwarding of the AID data packet and a RID data packet, wherein, a source address and a destination address of the RID data packet are represented by RIDs; and the ASR comprises the following specific functions:
   the ASR is configured to receive the AID data packet transmitted by the communication terminal of the new network, and analyze the AID data packet and encapsulate the analyzed AID data packet to be a RID data packet and forward the RID data packet to the ISN; wherein, in the RID data packet, a source address is a RID of the communication terminal of the new network, and a destination address is a RID used by the communication terminal of the Internet to inter-communicate with the new network; and is further configured to receive the RID data packet, and analyze the RID data packet and encapsulate the analyzed RID data packet to be an AID data packet and transmit the AID data packet to the communication terminal of the new network;
   the communication terminals of the new network dynamically correspond to the ASRs one by one.

Inter-communication Service Node (ISN for short hereinafter) is connected with the ASR, has a function of inter-communication data packet conversion, and is responsible for bidirectional conversion and forwarding of the RID data packet and an IP data packet, wherein, a source address and a destination address of the IP are represented by IP addresses; and the ISN comprises the following specific functions:
the ISN is configured to receive the RID data packet, analyze the RID data packet and encapsulate the analyzed RID data packet to be an IP data packet, transmit the IP data packet to the communication terminal of the Internet through the Internet, wherein, in the IP data packet, a source address is an IP address for the communication terminal of the new network to inter-communicate with the Internet, and a destination address is an IP address of the communication terminal of the Internet; and is further configured to receive the IP data packet, analyze the IP data packet and encapsulate the analyzed IP data packet to be a RID data packet, and forward the RID data packet to the ASR, wherein, in the RID data packet, a source address is a RID used by the communication terminal of the Internet to inter-communicate with the new network, and a destination address is a RID of the communication terminal of the new network;
the communication terminal of the Internet is located in the Internet (not shown in the figure), has an IP address, and an AID representing an identity and a RID representing a location, which are configured to implement the inter-communication, and is configured to generate and process the IP data packet, and communicate with the ISN using the IP data packet; and the communication terminal of the Internet comprises the following specific functions:
the communication terminal of the Internet is connected with the ISN through the Internet, and is configured to receive and process the IP data packet transmitted by the ISN; and is further configured to transmit the IP data packet to the ISN, wherein, a source address is an IP address of the communication terminal of the Internet, and a destination address is an IP address for the communication terminal of the new network to inter-communicate with the Internet;
the above-mentioned communication terminal of the new network is a service server or a terminal of the new network which provides service accesses, and the communication terminal of the Internet is a terminal or a service server of the Internet. The above inter-communication architecture can implement communications between the terminal of the new network and the terminal of the Internet, between the terminal of the new network and the service server of the Internet, between the terminal of the Internet and the terminal of the new network, and between the terminal of the Internet and the service server of the new network.

The coding of an Access Identifier (AID for short) of the service server or the terminal of the legacy network can be determined by requirements of the new network on the compatibility of the terminal and the development stage of the new network, which can be a public IPv4 address of the service server or the terminal in the legacy network, can be a public IPv6 address of the service server or the terminal in the legacy network, or can also be a long bit (beyond 32 bits) coding number including a public IPv4 address of the service server or the terminal in the legacy network.

The coding of a Routing-Location Identifiers (RID for short) of the service server or the terminal of the legacy network can be determined by requirements of the new network on the compatibility of the terminal and the development stage of the new network, which can be a public IPv4 address of the service server or the terminal in the legacy network, can be a public IPv6 address of the service server or the terminal in the legacy network, can also be a long bit (beyond 32 bits) coding number including a public IPv4 address of the service server or the terminal in the legacy network, or can also be a location identifier of the ISN. A relatively simple method is that the AID, RID and IP address of the service server or the terminal of the legacy network are the same. With this identifier rule, neither an additional allocation is needed, nor is it needed to store the mapping relationship.

The IP address for the service server or the terminal of the new network to inter-communicate with the legacy can be an AID of the service server of the new network, can be an exclusive, fixed public IP address, or can also be a public IP address shared by the legacy network and the new network which is configured specially for inter-communication.

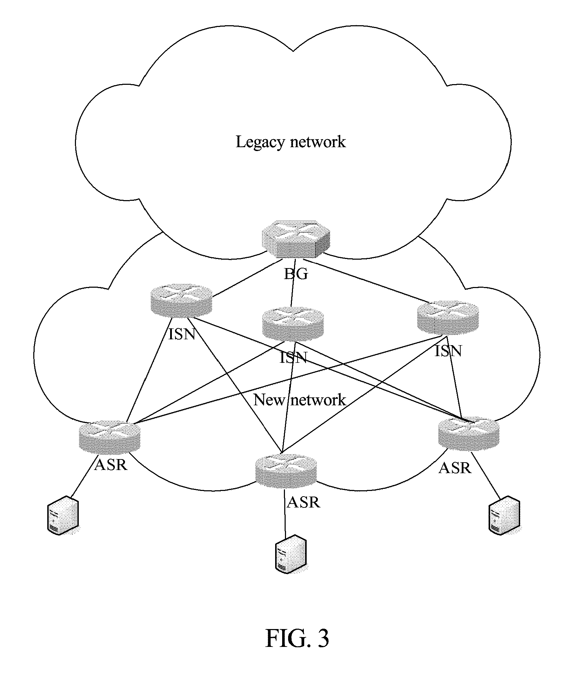

In order to implement the above inter-communication data packet conversion, the ISN needs to inquire a mapping relationship between the RID and the IP address which is stored locally or in a mapping server, to perform an address conversion processing during the data packet conversion, and further needs to forward the converted data packet. In order to lessen the burden on the ISN, in the specific implementation, a Boundary Gateway (BG for short) connected with the ISN can be added at the boundary between the new network and the legacy network, and the BG implements routing and forwarding of the IP data packet. The number and the location of the ISNs are configured according to load sharing required by the traffic and the distribution of the inter-communication, as shown in FIG. 3.

The inter-communication method according to the present invention will be described in detail by taking the network architecture illustrated in FIG. 3 as an example below.

Each terminal user in a new network has an Access Identifier, which is AID for short. The AID cannot be routed in the new network, and can be routed in the legacy network through a specific routing design and diffusion; each terminal user will also be dynamically allocated with a Routing-Location Identifier, which is RID for short.

### Application embodiment one

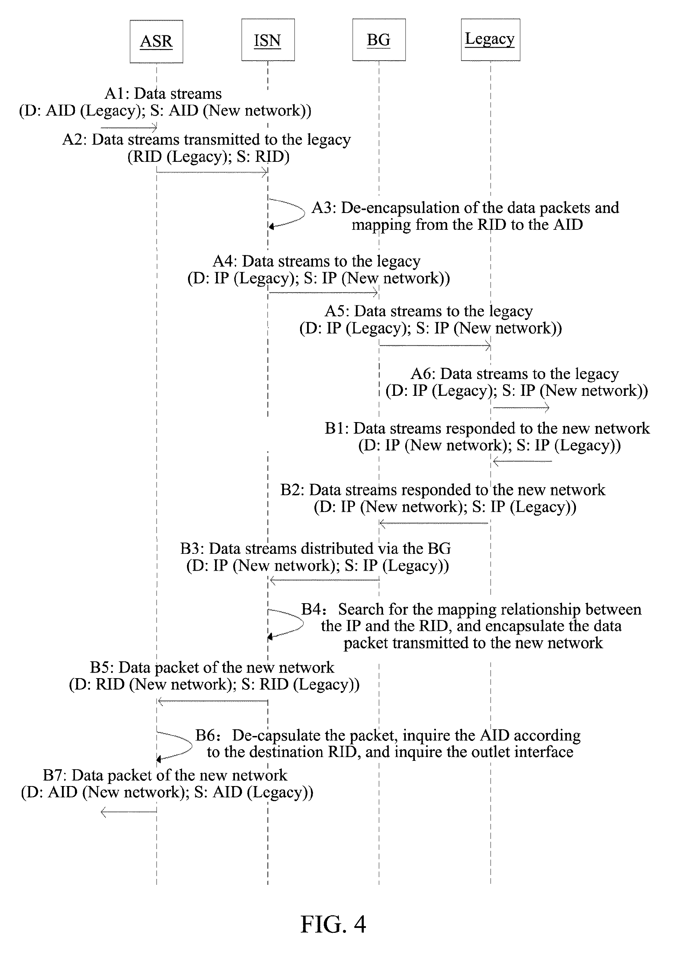

As shown in FIG. 4, data stream processing when data streams is upstream during a terminal of a new network accesses a service server in a legacy network(from the new network to the legacy network) comprises the following steps:
step A1: a data packet in the legacy network which is accessed by the terminal of the new network is transmitted to an ASR, wherein, a destination address thereof is an AID of the service server of the legacy network, and a source address is an AID of the terminal of the new network;
step A2: the ASR performs data packet conversion after inquiring a mapping relationship between the AID and the RID, wherein, a source address of the converted data packet is a RID of the terminal of the new network, and a destination address is a RID of the service server of the legacy network.
step A3: when the data packet in step A2 is forwarded to the ISN through routing, the ISN analyzes the RID, and obtains an IP address for the terminal of the new network to inter-communicate with the legacy network and an IP address of the service server of the legacy network according to the existing mapping relationship, and if there is no IP address for the terminal of the new network to inter-communicate with the legacy network, an IP address for the network inter-communication will be newly allocated, and the mapping relationship will be stored, and the ISN recombines the data packet into a data packet with a destination address being an IP address of the service server of the legacy network and a source address being an IP address of the terminal of the new network which is configured for the inter-communication.
steps A4 to A6: the recombined uplink data packet in A3 is forwarded to the corresponding service server according to routing in the ISN, BG and legacy network.

### Application embodiment two

A data stream processing when data streams are downstream during a terminal of a new network accesses a service server in a legacy network (from the legacy network to the new network) is as shown in FIG. 2:
steps B1to B3: a downlink data packet responded by the legacy network to the access by the new network terminal reaches the ISN through the legacy network and BG; wherein, a source address thereof is an IP address of the service server in the legacy network; and a destination address is an IP address for the terminal of the new network to inter-communicate with the legacy network;
step B4: the ISN inquires the mapping relationship between the IP and the RID according to the source IP address and the destination IP address of the data packet, and obtains the corresponding RID; and the ISN recombines the data packet into the one with a source address being a RID for the service server of the legacy network to inter-communicate with the new network and a destination address being a RID of an access terminal of the new network;
step B5: the data packet recombined in step B4 is forwarded to the ASR through routing;
step B6: the ASR analyzes the RID of the terminal of the new network, inquires the mapping relationship, forms a data packet with a destination address being an AID of the terminal and a source address being an AID of the service server of the legacy network, and searches for an outlet interface for the data packet;
step B7: the data packet is transmitted to the corresponding access terminal of the new network according to the outlet interface.

C). A data stream processing when data streams are downstream during a legacy network accesses a service server in a new network (from the legacy network to the new network):
   steps C1 to C2: the downstream data packets of the legacy network accessing the service server in the new network reaches the ISN through the legacy network and the BG; and a source address thereof is an IP address of an access terminal of the legacy network, and a destination address is an IP address for the service server in the new network to inter-communicate with the legacy network;
   step C3: the ISN inquires the mapping relationship between the IP address and the RID, and obtains the corresponding RIDs of the access terminal of the legacy network and the service server of the new network.
   step C4: the ISN converts the data packet into a data packet in the new network according to the mapping relationship, and a source address thereof is the RID of the access terminal of the legacy network, and a destination address is the RID of the service server of the new network;
   step C5: the data packet in step C6 is forwarded to the ASR, and the ASR analyzes an AID of the access terminal, inquires the mapping relationship, recombines and forms a data packet with a destination address being an AID of the service server of the new network and a source address being an AID of the access terminal of the legacy network, and inquires an outlet interface to the service server of the new network according to the AID of the service server of the new network;
   step C6: the ASR forwards the data packet to the corresponding service server of the new network according to the outlet interface.
D). A data stream processing when data streams are upstream during a legacy network accesses a service server in a new network (from the new network to the legacy network):
   step D1: an uplink data packet responded by the service server of the new network to the access by a terminal of the legacy network is transmitted to the ASR; wherein, a destination address is an AID of the access terminal of the legacy network; and a source address is an AID of the service server of the new network;
   steps D2 to D3: the ASR converts the uplink data packet into a data packet of the new network according to the mapping relationship between the AID and the RID and transmits the data packet to the ISN; wherein, a source address thereof is a RID of the service server of the new network, and a destination address is a RID of the terminal of the legacy network;
   step D4: when the data packet in D2 is forwarded to the ISN through routing, the ISN analyzes the RID, obtains an IP address of the terminal of the legacy network and an IP address for the service server of the new network to inter-communicate with the legacy network according to the mapping, and the ISN converts the data packet into a data packet with a destination address being an IP address of the access terminal of the legacy network and a source address being an IP address of the service server of the new network which is configured for the inter-communication;
   steps D5 to D7: in the ISN, BG and legacy network, the recombined uplink data packet in D3 is forwarded to the corresponding access terminal in the legacy network according to routing.

The process for the terminal of the new network to communicate with the terminal of the legacy network is similar to the above processes, and will not be described further here.

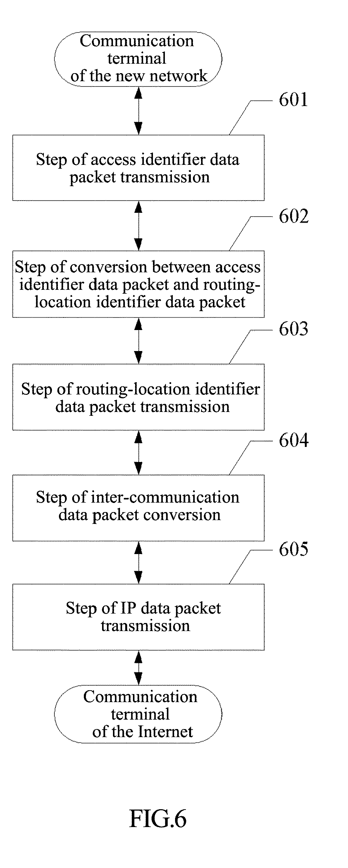

It can be seen from the above description and illustration that the inter-communication between the communication terminal of the new network and the communication terminal of the Internet through the identity route data packet conversion device and the inter-communication data packet conversion device. The communication terminal of the new network is located in the new network, and has an AID representing an identity, a RID representing a location, and an IP address configured to implement the inter-communication. The communication terminal of the Internet is located in the Internet, has an IP address, and an AID representing an identity and a RID representing a location which are configured to implement the inter-communication. As shown in FIG. 6, the method for implementing inter-communication between a new network and Internet comprises the following steps:
step 601: it is a step of AID data packet transmission, wherein, the AID data packet is transmitted between the communication terminal of the new network and an identity route data packet conversion device, and a source address and a destination address of the AID data packet are represented by AIDs;
step 602: it is a step of identity route data packet conversion, wherein, the identity route data packet conversion device performs inter-conversion between the AID data packet and a RID data packet, wherein, a source address and a destination address of the RID data packet are represented by RIDs;
step 603: it is a step of RID data packet transmission, wherein, the RID data packet is transmitted between the identity route data packet conversion device and an inter-communication data packet conversion device;
step 604: it is a step of inter-communication data packet conversion, wherein, the inter-communication data packet conversion device performs inter-conversion between the RID data packet and an IP data packet, wherein, a source address and a destination address of the IP data packet are represented by IP addresses;
step 605: it is a step of IP data packet transmission, wherein, the IP data packet is transmitted between the inter-communication data packet conversion device and the communication terminal of the Internet.

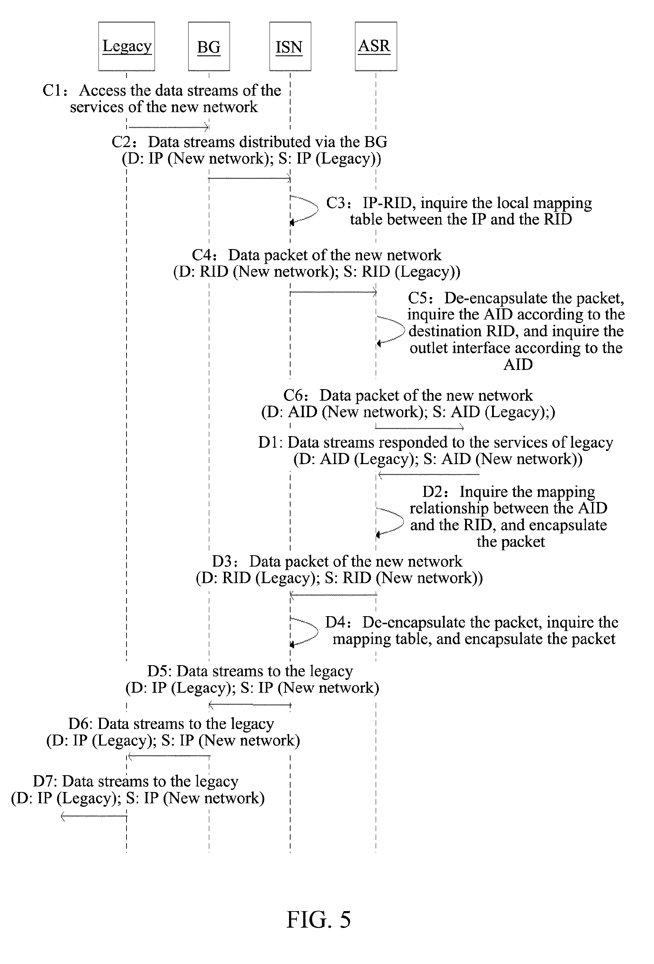

It is not difficult to see from FIG. 4 and FIG. 5 that the flow direction of the data packet determines the sequence of steps 601-605. If the data packet is transmitted from the communication terminal of the new network to the communication terminal of the Internet, the steps 601, 602, 603, 604, 605 are performed in sequence. If the data packet is transmitted from the communication terminal of the Internet to the communication terminal of the new network, the steps 605, 604, 603, 602, 601 are performed in sequence.

In addition, the present invention further provides the following two communication terminals:
One communication terminal is applied to the new network, has an AID representing an identity, a route identity representing a location, and an IP address configured to implement the inter-communication, is configured to generate and process an AID data packet, and communicate with the identity route data packet conversion device using the AID data packet, wherein, a source address and a destination address of the AID data packet are represented by AIDs.
the other communication terminal is applied to the Internet, has an IP address, and an AID representing an identity and a RID representing a location which are configured to implement the inter-communication, and is configured to generate and process an IP data packet, and communicate with the communication terminal of the Internet using the IP data packet, wherein, a source address and a destination address of the IP data packet are represented by IP addresses.

### Industrial Applicability

The method and system for implementing inter-communication between a new network and an existing Internet (legacy network) according to the present invention implements data inter-communication between the legacy network and the new network, expands the applicable scope of services, and enables inter-communication between networks using different identifiers to distinguish communication terminals, by adding inter-communication service nodes with bidirectional conversion and forwarding functions of the inter-communication data packet between the new network and the legacy network, which specifically comprise:
the new network terminal can access various services of the existing network, and inter-communicate with the existing network terminals; and
the services of the new network can be accessed commonly by terminals of the existing network and the new network if the services are transplanted from the existing network; and
the terminal of the existing network can access the new network without any amendment, and can use the services of the existing network and the services transplanted into the new network.

## Claims

1. A method for implementing inter-communication between a new network and the Internet, comprising a process of transmitting a data packet from a communication terminal of the new network to a communication terminal of the Internet, wherein, the process of transmitting a data packet from a communication terminal of the new network to a communication terminal of the Internet comprises:
the communication terminal of the new network transmitting an access identifier data packet to an Access Service Router (ASR) of the new network, wherein, a source address is an access identifier of the communication terminal of the new network, and a destination address is an access identifier used by the communication terminal of the Internet to inter-communicate with the new network;
the ASR receiving the access identifier data packet, analyzing the access identifier data packet and then encapsulating the analyzed access identifier data packet to be a routing-location identifier data packet, and then transmitting the routing-location identifier data packet to an Inter-communication Service Node (ISN), wherein, in the routing-location identifier data packet, a source address is a routing-location identifier of the communication terminal of the new network, and a destination address is a routing-location identifier used by the communication terminal of the Internet to inter-communicate with the new network;
after receiving the routing-location identifier data packet, the ISN analyzing the routing-location identifier data packet and then encapsulating the routing-location identifier data packet to be an IP data packet, wherein, a source address is an IP address used by the communication terminal of the new network to inter-communicate with the Internet, and a destination address is an IP address of the communication terminal of the Internet; and
the ISN transmitting the IP data packet to the communication terminal of the Internet through routing.

2. The method according to claim 1, further comprising a process of the communication terminal of the Internet transmitting a data packet to the communication terminal of the new network, wherein, the process of the communication terminal of the Internet transmitting a data packet to the communication terminal of the new network comprises:
the ISN receiving an IP data packet transmitted by the communication terminal of the Internet, wherein, a source address is an IP address of the communication terminal of the Internet, and a destination address is an IP address used by the communication terminal of the new network to inter-communicate with the Internet;
the ISN analyzing the IP data packet, encapsulating the analyzed IP data packet to be a routing-location identifier data packet, and then transmitting the encapsulated routing-location identifier data packet to the ASR, wherein, in the routing-location identifier data packet, a source address is a routing-location identifier used by the communication terminal of the Internet to inter-communicate with the new network, and a destination address is a routing-location identifier of the communication terminal of the new network;
the ASR de-encapsulating the routing-location identifier data packet into an access identifier data packet, wherein, a source address is an access identifier used by the communication terminal of the Internet to inter-communicate with the new network, and a destination address is an access identifier of the communication terminal of the new network; and
the ASR transmitting the access identifier data packet to the communication terminal of the new network through routing.

3. The method according to claim 1 or 2, wherein, the communication terminal of the Internet is a terminal or a service server of the Internet and the communication terminal of the new network is a service server or a terminal of the new network.

4. The method according to claim 1 or 2, wherein, the access identifier of the communication terminal of the Internet is an IPv4 address, an IPv6 address of the communication terminal of the Internet in the Internet or a long bit including the IPv4 address; the routing-location identifier of the communication terminal of the Internet is an IPv4 address, an IPv6 address of the new network communication terminal in the Internet, a long bit including the IPv4 address, or a location identifier of the ISN; and the IP address of the communication terminal of the new network is an access identifier of the new network communication terminal in the new network, an exclusive, fixed public IP address, or a shared, public IP address which is specifically configured for inter-communication.

5. A method for implementing inter-communication between a new network and the Internet, wherein, a communication terminal of the new network and a communication terminal of the Internet implement the inter-communication through an identity route data packet conversion device and an inter-communication data packet conversion device; the communication terminal of the new network is located in the new network and has an access identifier representing an identity, a routing-location identifier representing a location and an IP address configured to implement the inter-communication; and the communication terminal of the Internet is located in the Internet, and has an IP address, and an access identifier representing an identity and a routing-location identifier representing a location which are configured to implement the inter-communication, the method comprises:
a step of access identifier data packet transmission, wherein, the access identifier data packet is transmitted between the communication terminal of the new network and the identity route data packet conversion device, and a source address and a destination address of the access identifier data packet are represented by access identifiers;
a step of identity route data packet conversion, wherein, the identity route data packet conversion device performs inter-conversion between the access identifier data packet and the routing-location identifier data packet, and a source address and a destination address of the routing-location identifier data packet are represented by routing-location identifiers;
a step of routing-location identifier data packet transmission, wherein, the routing-location identifier data packet is transmitted between the identity route data packet conversion device and the inter-communication data packet conversion device;
a step of inter-communication data packet conversion, wherein, the inter-communication data packet conversion device performs inter-conversion between the routing-location identifier data packet and an IP data packet, and a source address and a destination address of the IP data packet are represented by IP addresses; and
a step of IP data packet transmission, wherein, the IP data packet is transmitted between the inter-communication data packet conversion device and the communication terminal of the Internet.

6. The method according to claim 5, wherein, the communication terminal of the Internet is a terminal or a service server of the Internet and the communication terminal of the new network is a service server or a terminal of the new network.

7. The method according to claim 5, wherein, the access identifier of the communication terminal of the Internet is an IPv4 address, an IPv6 address of the Internet communication terminal in the Internet or a long bit including the IPv4 address; the routing-location identifier of the communication terminal of the Internet is an IPv4 address, an IPv6 address of the new network communication terminal in the Internet, a long bit including the IPv4 address, or a location identifier of the ISN; and the IP address of the communication terminal of the new network is an access identifier of the new network communication terminal in the new network, an exclusive, fixed public IP address, or a shared, public IP address which is specifically configured for the inter-communication.

8. A system for implementing inter-communication between a new network and the Internet, comprising a communication terminal of the Internet, an Inter-communication Service Node (ISN), an Access Service Router (ASR) and a communication terminal of the new network, wherein,
the communication terminal of the new network is configured to transmit an access identifier data packet to the ASR, wherein, a source address is an access identifier of the communication terminal of the new network, and a destination address is an access identifier used by the communication terminal of the Internet to inter-communicate with the new network;
the ASR is located in the new network and is connected with the communication terminal of the new network, and is configured to receive the access identifier data packet transmitted by the communication terminal of the new network, and analyze the access identifier data packet and encapsulate the analyzed access identifier data packet to be a routing-location identifier data packet and forward the routing-location identifier data packet to the ISN, wherein, in the routing-location identifier data packet, a source address is a routing-location identifier of the communication terminal of the new network, and a destination address is a routing-location identifier used by the communication terminal of the Internet to inter-communicate with the new network;
the ISN is connected with the ASR, and is configured to receive the routing-location identifier data packet, and analyze the routing-location identifier data packet and encapsulate the analyzed routing-location identifier data packet to be an IP data packet, wherein, a source address is an IP address for the communication terminal of the new network to inter-communicate with the Internet, and a destination address is an IP address of the communication terminal of the Internet; and is further configured to transmit the IP data packet to the communication terminal of the Internet through the Internet; and
the communication terminal of the Internet is connected with the ISN through the Internet, and is configured to receive and process the IP data packet transmitted by the ISN.

9. The system according to claim 8, wherein,
the communication terminal of the Internet is further configured to transmit the IP data packet to the ISN, wherein, a source address is an IP address of the communication terminal of the Internet, and a destination address is an IP address for the communication terminal of the new network to inter-communicate with the Internet;
the ISN is further configured to receive the IP data packet, analyze the IP data packet and encapsulate the analyzed IP data packet to be a routing-location identifier data packet, and forward the routing-location identifier data packet to the ASR, wherein, in the routing-location identifier data packet, a source address is a routing-location identifier used by the communication terminal of the Internet to inter-communicate with the new network, and a destination address is a routing-location identifier of the communication terminal of the new network;
the ASR is further configured to receive the routing-location identifier data packet, analyze the routing-location identifier data packet and encapsulate the analyzed routing-location identifier data packet to be an access identifier data packet, and transmit the access identifier data packet to the corresponding communication terminal of the new network, wherein, in the access identifier data packet, a source address is an access identifier of the communication terminal of the Internet, and a destination address is an access identifier of the communication terminal of the new network in the new network; and
the communication terminal of the new network is configured to receive and process the access identifier data packet.

10. The system according to claim 8 or 9, wherein, the communication terminal of the Internet is a terminal or a service server of the Internet and the communication terminal of the new network is a service server or a terminal of the new network.

11. The system according to claim 8 or 9, wherein, the access identifier of the communication terminal of the Internet is an IPv4 address, an IPv6 address of the communication terminal of the Internet in the Internet or a long bit including the IPv4 address; the routing-location identifier of the communication terminal of the Internet is an IPv4 address, an IPv6 address of the new network communication terminal in the Internet, a long bit including the IPv4 address, or a location identifier of the ISN; and the IP address of the communication terminal of the new network is an access identifier of the new network communication terminal in the new network, an exclusive, fixed public IP address, or a shared, public IP address which is specifically configured for the inter-communication.

12. A system for implementing inter-communication between a new network and the Internet, comprising:
a communication terminal of the new network, which is located in the new network, has an access identifier representing an identity, a routing-location identifier representing a location, and an IP address configured to implement the inter-communication, and is configured to generate and process an access identifier data packet, of which a source address and a destination address are represented by access identifiers; and is further configured to communicate with an identity route data packet conversion device using the access identifier data packet;
the identity route data packet conversion device, which is configured to implement bidirectional conversion and forwarding of the access identifier data packet and a routing-location identifier data packet, wherein, a source address and a destination address of the routing-location identifier data packet are represented by routing-location identifiers;
an inter-communication data packet conversion device, which is configured to implement bidirectional conversion and forwarding of the routing-location identifier data packet and an IP data packet, wherein, a source address and a destination address of the IP data packet are represented by IP addresses; and is further configured to communicate with a communication terminal of the Internet using the IP data packet; and
the communication terminal of the Internet, which is located in the Internet, has an IP address, and an access identifier representing an identity and a routing-location identifier representing a location which are configured to implement the inter-communication, and is configured to generate and process the IP data packet.

13. The system according to claim 12, wherein, the communication terminal of the Internet is a terminal or a service server of the Internet and the communication terminal of the new network is a service server or a terminal of the new network.

14. The system according to claim 12, wherein, the access identifier of the communication terminal of the Internet is an IPv4 address, an IPv6 address of the Internet communication terminal in the Internet or a long bit including the IPv4 address; the routing-location identifier of the communication terminal of the Internet is an IPv4 address, an IPv6 address of the new network communication terminal in the Internet, a long bit including the IPv4 address, or a location identifier of the ISN; and the IP address of the communication terminal of the new network is an access identifier of the new network communication terminal in the new network, an exclusive, fixed public IP address, or a shared, public IP address which is specifically configured for the inter-communication.

15. A communication terminal, which is applied to a new network, has an access identifier representing an identity, a routing-location identifier representing a location and an IP address configured to implement inter-communication, and is configured to generate and process an access identifier data packet, and communicate with an identity route data packet conversion device using the access identifier data packet, wherein, a source address and a destination address of the access identifier data packet are represented by access identifiers.

16. A communication terminal, which is applied to the Internet, has an IP address and an access identifier representing an identity and a routing-location identifier representing a location which are configured to implement inter-communication, and is configured to generate and process an IP data packet, and communicate with a communication terminal of the Internet using the IP data packet, wherein, a source address and a destination address of the IP data packet are represented by IP addresses.
